# EUROPEAN PATENT APPLICATION

(11) **EP 4 572 527 A1**
(43) Date of publication of application: **18.06.2025**
(21) Application number: 24216067.9
(22) Date of filing: 28.11.2024
(51) Int. Cl.: H04W 84/12, H04W 74/0833

(54) **APPARATUS AND METHOD FOR TRANSMITTING LATENCY-SENSITIVE DATA IN WIRELESS NETWORK SYSTEM**

(30) Priority: 13.12.2023 US 202363609665 P; 12.03.2024 KR 20240034719
(71) Applicant: Samsung Electronics Co., Ltd., Suwon-si, Gyeonggi-do 16677 (KR)
(72) Inventor: KIM, Myeongjin, Suwon-si, Gyeonggi-do 16677 (KR); KANDALA, Srinivas, San Jose, CA 95134 (US)
(74) Representative: Kuhnen & Wacker Patent- und Rechtsanwaltsbüro PartG mbB

(57) **Abstract**

An operating method of a first apparatus communicating with a second apparatus in a wireless network includes: receiving, from the second apparatus, a trigger frame (21) including information about a random access frequency band (FB1-FB3) and information about an intermediate transmission time (t5), and transmitting a physical layer convergence procedure, PLCP, service data unit, PSDU, including a short training field, STF, and first data to the second apparatus through the random access frequency band (FB1-FB3) at the intermediate transmission time (t5), wherein the intermediate transmission time (t5) is in a physical layer protocol data unit, PPDU, transmission period (24).

## Description

### BACKGROUND

The embodiments of the disclosure relate to an apparatus and method for transmitting latency-sensitive data in a wireless network such as a wireless local area network (WLAN) system.

As an example of wireless communication, the WLAN may be a technology for connecting two or more devices to each other by using a wireless signal transmission method, and the WLAN technology may be based on the Institute of Electrical and Electronics Engineers (IEEE) 802.11 standard. The 802.11 standard has evolved into 802. 11b, 802.11a, 802.11g, 802.11n, 802.11ac, 802.11ax, and the like, and may support transmission rates of up to 1 Gbyte/s based on the orthogonal frequency division multiplexing (OFDM) technology.

In 802.11ac, data may be simultaneously transmitted to multiple users through a multi-user multiple input multiple output (MU-MIMO) scheme. In 802.11ax referred to as High Efficiency (HE), multiple access may be implemented by providing available subcarriers to users in a divided manner by using not only the MU-MIMO scheme but also the orthogonal frequency division multiple access (OFDMA) technology. Accordingly, a WLAN system based on the 802.11ax may effectively support communication in dense areas and outdoors.

In 802.11be referred to as Extremely High Throughput (EHT), it may be intended to implement support of a 6 GHz unlicensed frequency band, utilization of a bandwidth of up to 320 MHz per channel, introduction of a hybrid automatic repeat and request (HARQ), support of up to 16×16 MIMO, and the like. Accordingly, like New Radio (NR) that is 5G technology, next-generation WLAN systems are expected to effectively support low latency and ultrahigh-speed transmission.

The WLAN technology may be used for services of interacting with environments in real time, such as augmented reality and robot control. Data used in the real-time services may be latency-sensitive data that should be transmitted to other devices with minimum latency. Thus, various methods for rapidly transmitting latency-sensitive data in WLAN systems have been researched.

### SUMMARY

The disclosure provides an apparatus and method for rapidly transmitting latency-sensitive data in a wireless network such as a wireless local area network (WLAN) system.

According to an aspect of the disclosure, there is provided an operating method of a first apparatus communicating with a second apparatus in a wireless network, the operating method including receiving, from the second apparatus, a trigger frame including information about a random access frequency band and information about an intermediate transmission time, and transmitting a physical layer convergence procedure (PLCP) service data unit (PSDU) including a short training field (STF) and first data to the second apparatus through the random access frequency band at the intermediate transmission time, wherein the intermediate transmission time is in a physical layer protocol data unit (PPDU) transmission period.

According to another aspect of the disclosure, there is provided an operating method of a second apparatus communicating with a first apparatus in a wireless network, the operating method including generating a trigger frame, and transmitting the trigger frame to the first apparatus, wherein the trigger frame includes information about an intermediate transmission time in a PPDU transmission period at which the first apparatus is to transmit a PSDU including an STF and first data through a random access frequency band.

According to still another aspect of the disclosure, there is provided an operating method of a first apparatus communicating with a second apparatus in a WLAN system, the operating method including receiving a trigger frame including information about a frequency band allocated from the second apparatus and information about an intermediate transmission time, and transmitting a PPDU through the allocated frequency band, wherein the transmitting the PPDU includes transmitting an STF through the allocated frequency band at the intermediate transmission time, and the intermediate transmission time is a time in a PPDU transmission period at which a PSDU including first data is to be transmitted through a random access frequency band.

According to another aspect of the inventive concept, there is provided a first apparatus communicating with a second apparatus in a wireless network, the first apparatus including a transceiver configured to receive, from the second apparatus, a trigger frame including information about a random access frequency band and information about an intermediate transmission time, and a processing circuit configured to, when a transmission request to transmit first data occurs in a PPDU transmission period, transmit a PSDU including an STF and the first data to the second apparatus through the random access frequency band at the intermediate transmission time, wherein the trigger frame instructs to transmit the STF at the intermediate transmission time over an entire frequency band in which the PPDU is transmitted.

According to another aspect of the inventive concept, there is provided a second apparatus communicating with a first apparatus in a wireless network, the second apparatus including a transceiver configured to generate a trigger frame, and transmit the trigger frame to the first apparatus, wherein the trigger frame includes information about an intermediate transmission time in a PPDU transmission period at which the first apparatus is to transmit a PSDU including an STF and first data through a random access frequency band.

### BRIEF DESCRIPTION OF DRAWINGS

Embodiments will be more clearly understood from the following detailed description taken in conjunction with the accompanying drawings in which:
FIG. 1 is a diagram illustrating a wireless communication system according to one or more embodiments;
FIG. 2 is a block diagram illustrating a wireless communication system according to one or more embodiments;
FIG. 3 is a timing diagram illustrating an example of signaling between an access point and a station in a wireless communication system according to one or more embodiments;
FIG. 4 is a diagram illustrating an example of a trigger frame transmitted by an access point according to one or more embodiments;
FIG. 5 is a diagram illustrating an example of a physical layer protocol data unit (PPDU) transmitted by a station according to one or more embodiments;
FIG. 6 is a diagram illustrating an example of a physical layer convergence procedure (PLCP) service data unit (PSDU) transmitted by a station according to one or more embodiments;
FIG. 7 is a timing diagram illustrating another example of signaling between an access point and a station in a wireless communication system according to one or more embodiments;
FIG. 8 is a flowchart illustrating an operation of a station according to one or more embodiments;
FIG. 9 is a flowchart illustrating an operation of an access point according to one or more embodiments;
FIG. 10 is a flowchart illustrating an operation of a wireless communication system according to one or more embodiments; and
FIG. 11 is a diagram illustrating examples of devices for wireless communication according to one or more embodiments.

### DETAILED DESCRIPTION

The embodiments described herein are non-limiting example embodiments, and thus, the disclosure is not limited thereto and may be realized in various other forms. As used herein, an expression "at least one of" preceding a list of elements modifies the entire list of the elements and does not modify the individual elements of the list. For example, an expression, "at least one of a, b, and c" should be understood as including only a, only b, only c, both a and b, both a and c, both b and c, or all of a, b, and c. Hereinafter, the embodiments will be described in detail with reference to the accompanying drawings.

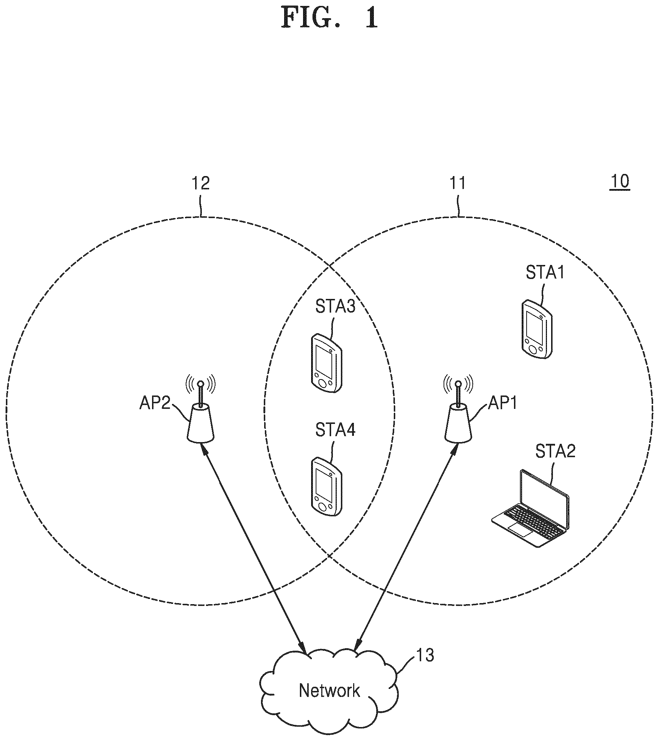

FIG. 1 is a diagram illustrating a wireless communication system according to one or more embodiments.

FIG. 1 illustrates a wireless local area network (WLAN) system as an example of a wireless communication system 10.

In describing embodiments in detail, an orthogonal frequency division multiplexing (OFDM) or orthogonal frequency division multiple access (OFDMA)-based wireless communication system, for example, the IEEE 802.11 standard, will be mainly described. However, the embodiments may also be applied to other communication systems with a similar technical background and channel type (e.g., cellular communication systems such as Long Term Evolution (LTE), LTE-Advanced (LTE-A), New Radio (NR), Wireless Broadband (WiBro), and Global System for Mobile communication (GSM) or short-range communication systems such as Bluetooth and Near Field Communication (NFC)) with slight modifications without significantly departing from the scope of the disclosure, at the discretion of those of ordinary skill in the art.

Also, various functions described below may be implemented or supported by artificial intelligence technologies or one or more computer programs, and each of the programs may include computer-readable program code and may be implemented in a computer-readable medium. The terms "application" and "program" may refer to one or more computer programs, software components, instruction sets, procedures, functions, objects, classes, instances, related data, or portions thereof suitable for implementation of suitable computer-readable program code. The term "computer-readable program code" may include all types of computer code including source code, object code, and execution code. The term "computer-readable medium" may refer to all types of computer-accessible mediums such as read only memories (ROMs), random access memories (RAMs), hard disk drives, compact disks (CDs), digital video disks (DVDs), or any other types of memories. "Non-transitory" computer-readable mediums may exclude wired, wireless, optical, or other communication links that transmit transient electrical or other signals. The non-transitory computer-readable mediums may include mediums in which data may be permanently stored and mediums such as rewritable optical disks or erasable memory devices in which data may be stored and overwritten later.

In various embodiments described below, a hardware-wise approach will be described as an example. However, because the various embodiments include technology using both hardware and software, the various embodiments do not exclude software-based approaches.

Also, as used in the following description, terms referring to control information, terms referring to entries, terms referring to network entities, terms referring to messages, terms referring to device components, and the like may be merely examples for convenience of description. Thus, the disclosure is not limited to the terms described below and other terms having equivalent technical meanings may be used.

Referring to FIG. 1, the wireless communication system 10 may include a first access point AP1, a second access point AP2, a first station STA1, a second station STA2, a third station STA3, and a fourth station STA4. The first access point AP1 and the second access point AP2 may be connected to a network 13 including the Internet, an internet protocol (IP) network, or any other network. The first access point AP1 may provide access to the network 13 to the first station STA1, the second station STA2, the third station STA3, and the fourth station STA4 within a first coverage area 11, and the second access point AP2 may also provide access to the network 13 to the third and fourth stations STA3 and STA4 within a second coverage area 12. In some embodiments, the first access point AP1 and the second access point AP2 may communicate with at least one of the first station STA1, the second station STA2, the third station STA3, and the fourth station STA4 based on Wireless Fidelity (WiFi) or any other WLAN access technology.

An access point may be referred to as a router, a gateway, or the like, and a station may be referred to as a mobile station, a subscriber station, a terminal, a mobile terminal, a wireless terminal, a user equipment, a user, or the like. The station may be a mobile device such as a mobile phone, a laptop computer, or a wearable device or may be a stationary device such as a desktop computer or a smart TV. Herein, a station STA may be referred to as a first apparatus, and an access point AP may be referred to as a second apparatus.

The access points AP1 and AP2 may allocate at least one resource unit (RU) to at least one station among the stations STA1 to STA4. The access points AP1 and AP2 may transmit data through at least one allocated resource unit, and the at least one station may receive data through the at least one allocated resource unit. In 802.11ax, the access points AP1 and AP2 may allocate only a single resource unit to at least one station among the stations STA1 to STA4, whereas, in 802.11be (e.g., Extremely High Throughput (EHT)) or the next-generation IEEE 802.11 standards (e.g., EHT+ or Ultra High Reliability (UHR)), the access points AP1 and AP2 may allocate a multi-resource unit (MRU) including two or more resource units to the at least one station. For example, the first access point AP1 may allocate multiple resource units to at least one station among the stations STA1 to STA4, and transmit data through the allocated multiple resource units.

The access points AP1 and AP2 may allocate a resource unit to at least one station among the stations STA1 to STA4 through a trigger frame. The stations STA1 to STA4 may identify an allocated resource unit based on the trigger frame and transmit data to the access points AP1 and AP2 through the allocated resource unit.

The embodiments may relate to a method of, when there are latency-sensitive data (hereinafter referred to as first data) that should be transmitted from the stations STA1 to STA4 to other devices with minimum latency, transmitting the first data to the access points AP1 and AP2 as rapidly as possible. For example, a latency-sensitive data may refer to a data for alerting an accident in a home network.

In one or more embodiments, the access points AP1 and AP2 may transmit, to the stations STA1 to STA4, a trigger frame including a field indicating that a physical layer convergence procedure (PLCP) service data unit (PSDU) including a short training field (STF) and first data through a random access frequency band at an intermediate transmission time included in a physical layer protocol data unit (PPDU) transmission period. The trigger frame may include information about the random access frequency band and information about the intermediate transmission time. The stations STA1 to STA4 may determine the random access frequency band based on the trigger frame, and transmit the PSDU including the STF and the first data through the random access frequency band at the intermediate transmission time in the PPDU period. Accordingly, the first data may be rapidly transmitted. Herein, the term "time" as may refer to a time point or a time segment, and thus, the "intermediate transmission time" may refer to an intermediate transmission time point or an intermediate transmission time segment.

Also, in one or more embodiments, the access points AP1 and AP2 may transmit, to the stations STA1 to STA4, a trigger frame including a field instructing to transmit the STF at the intermediate transmission time in the PPDU period over the entire frequency band in which the PPDU is transmitted. The stations STA1 to STA4 may transmit the STF at the intermediate transmission time even when not transmitting the first data based on the trigger frame. Accordingly, a smooth automatic gain control (AGC) operation may be performed in the access points AP1 and AP2.

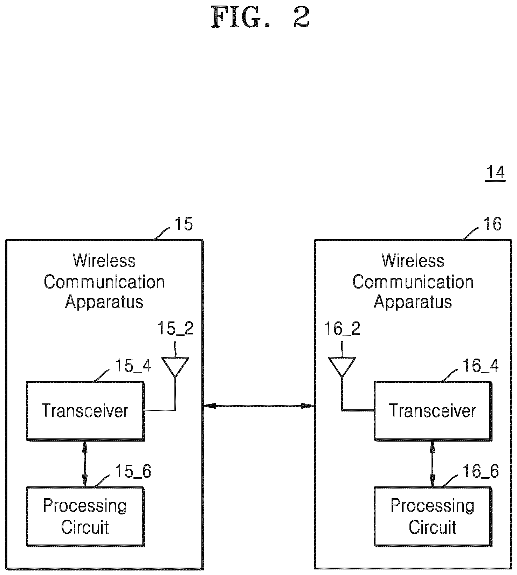

FIG. 2 is a block diagram illustrating a wireless communication system according to one or more embodiments.

Referring to FIG. 2, a wireless communication system 14 may include a first wireless communication apparatus 15 and a second wireless communication apparatus 16 that communicate with each other. Each of the first wireless communication apparatus 15 and the second wireless communication apparatus 16 of FIG. 2 may be any device communicating in the wireless communication system 14 and may be referred to as a device for wireless communication. In some embodiments, each of first wireless communication apparatus 15 and the second wireless communication apparatus 16 may be an access point or a station in a WLAN system.

The first wireless communication apparatus 15 may include an antenna 15_2, a transceiver 15_4, and a processing circuit 15_6. In some embodiments, the antenna 15_2, the transceiver 15_4, and the processing circuit 15_6 may be included in one package or may be respectively included in different packages. The second wireless communication apparatus 16 may also include an antenna 16_2, a transceiver 16_4, and a processing circuit 16_6. Hereinafter, redundant descriptions between the first wireless communication apparatus 15 and the second wireless communication apparatus 16 will be omitted for conciseness.

The antenna 15_2 may receive a signal from the second wireless communication apparatus 16 and provide the signal to the transceiver 15_4, and may transmit a signal provided from the transceiver 15_4 to the second wireless communication apparatus 16. In some embodiments, the antenna 15_2 may include a plurality of antennas for multiple input multiple output (MIMO). Also, in some embodiments, the antenna 15_2 may include a phased array for beamforming.

The transceiver 15_4 may process a signal received from the second wireless communication apparatus 16 through the antenna 15_2 and provide the processed signal to the processing circuit 15_6. Also, the transceiver 15_4 may process a signal provided from the processing circuit 15_6 and output the processed signal through the antenna 15_2. In some embodiments, the transceiver 15_4 may include analog circuits including at least one of a low noise amplifier, a mixer, a filter, a power amplifier, and an oscillator. In some embodiments, based on the control by the processing circuit 15_6, the transceiver 15_4 may process a signal received from the antenna 15_2 and/or a signal received from the processing circuit 15_6.

By processing the signal received from the transceiver 15_4, the processing circuit 15_6 may extract information transmitted by the second wireless communication apparatus 16. For example, the processing circuit 15_6 may extract information by demodulating and/or decoding the signal received from the transceiver 15_4. Also, the processing circuit 15_6 may generate a signal including information to be transmitted to the second wireless communication apparatus 16 and provide the signal to the transceiver 15_4. For example, the processing circuit 15_6 may provide, to the transceiver 15_4, a signal generated by encoding and/or modulating data to be transmitted to the second wireless communication apparatus 16. In some embodiments, the processing circuit 15_6 may include a programmable component such as a central processing unit (CPU) or a digital signal processor (DSP), may include a reconfigurable component such as a field programmable gate array (FPGA), or may include a component providing a fixed function, such as an intellectual property (IP) core. In some embodiments, the processing circuit 15_6 may include or access a memory, that stores data and/or a series of instructions, in the first wireless communication apparatus 15.

Herein, the transceiver 15_4 and/or the processing circuit 15_6 performing operations may be simply referred to as the first wireless communication apparatus 15 performing the operations. Accordingly, operations performed by an access point may be performed by a transceiver and/or a processing circuit included in the access point, and operations performed by a station may be performed by a transceiver and/or a processing circuit included in the station.

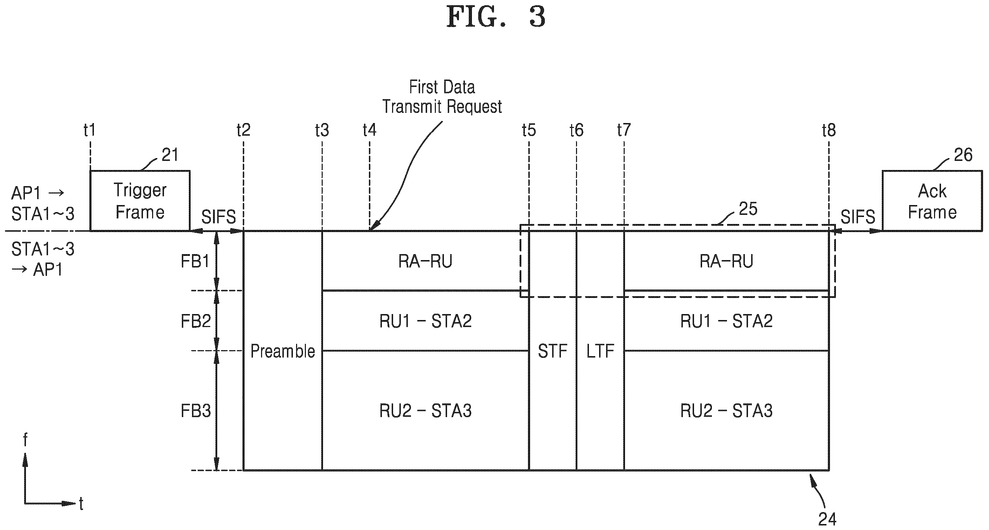

FIG. 3 is a timing diagram illustrating an example of signaling between an access point and a station in a wireless communication system according to one or more embodiments.

Referring to FIG. 3, signals transmitted between the first access point AP1 and the first to third stations STA1 to STA3 may be identified. Hereinafter, one or more embodiments in which one access point communicates with three stations will be mainly described with reference to FIG. 3. However, the disclosure is not limited thereto and may also be applied to a case where the number of access points and the number of stations are different therefrom.

At a first time 11, the first access point AP1 may transmit a trigger frame 21 to the first to third stations STA1 to STA3. The trigger frame 21 may be a frame for an access point to allocate resources for uplink transmission to a station.

Between the second time t2 and the eighth time t8 after a time period corresponding to a short inter frame space (SIFS) has elapsed after the first access point AP1 transmitted the trigger frame 21, the first to third stations STA1 to STA3 may transmit a PPDU 24 to the first access point AP1. Between the second time t2 and the eighth time t8, each of the first to third stations STA1 to STA3 may transmit the PPDU 24 in a frequency band indicated by the trigger frame 21. Hereinafter, a time period between the second time t2 to the eighth time t8 at which the PPDU 24 is transmitted may be referred to as a PPDU transmission period.

In the embodiment of FIG. 3, a first frequency band FB1 may be set as a random access resource unit (RA-RU) by the trigger frame 21. The random access resource unit may not be allocated to be used solely by any one of the first to third stations STA1 to STA3, and the random access resource unit may be used by any one of the first to third stations STA1 to STA3 as necessary. Hereinafter, the first frequency band FB1 set as the random access resource unit may be referred to as a random access frequency band.

A second frequency band FB2 may be set as a first resource unit RU1 allocated to the second station STA2 by the trigger frame 21. The second station STA2 may transmit data to the first access point AP1 by using the first resource unit RU1.

A third frequency band FB3 may be set as a second resource unit RU2 allocated to the third station STA3 by the trigger frame 21. The third station STA3 may transmit data to the first access point AP1 by using the second resource unit RU2.

Between the second time t2 and the third time t3, a preamble of the PPDU 24 may be transmitted through the first to third frequency bands. The second station STA2 may transmit the preamble of the PPDU 24 through the second frequency band FB2 between the second time t2 and the third time t3. Also, the third station STA3 may transmit the preamble of the PPDU 24 through the third frequency band FB3 between the second time t2 and the third time t3. In this case, when there is no station using the first frequency band FB1, the preamble may not be transmitted through the first frequency band FB1.

Between the third time t3 and the eighth time t8, a payload of the PPDU 24 may be transmitted through the first to third frequency bands. The second station STA2 may transmit the payload of the PPDU 24 through the second frequency band FB2 between the third time t3 and the eighth time t8. Also, the third station STA3 may transmit the payload of the PPDU 24 through the third frequency band FB3 between the third time t3 and the eighth time t8. In this case, when there is no station using the first frequency band FB1, the payload may not be transmitted through the first frequency band FB1.

In this case, a transmission request for the first data may occur in the first station STA1 at the fourth time t4. In the embodiment of FIG. 3, a transmission request for the first data occurs is between the third time t3 and the fifth time t5. However, the disclosure is not limited thereto. Unlike the embodiment of FIG. 3, the fourth time t4 at which a transmission request for the first data occurs may be between the second time t2 and the third time t3. Herein, the transmission request for the first data may refer to a request for transmitting the first data from a corresponding station (e.g., the first station STA1) to one or more other devices.

Also, hereinafter, a case where a transmission request for the first data occurs in the first station STA1 will be mainly described. However, the following description may also be similarly applied to a case where a transmission request for the first data occurs in the second station STA2 or the third station STA3.

The first data may be latency-sensitive data that should be transmitted with minimum latency. As in the embodiment of FIG. 3, when a transmission request for the first data occurs in the PPDU transmission period, the current PPDU transmission period may end, and when the first data is transmitted in the next PPDU transmission period progressed by the subsequent trigger frame, a large latency may occur in the transmission of the first data.

In one or more embodiments, the first station STA1 may transmit a PSDU 25 including the first data through the random access frequency band at an intermediate transmission time indicated by the trigger frame 21. That is, the first station STA1 may transmit the PSDU 25 including the first data at the intermediate transmission time of the current PPDU transmission period without waiting until the next PPDU transmission period.

In the embodiment of FIG. 3, the intermediate transmission time may be the fifth time t5. In this case, the first station STA1 may transmit the PSDU 25 including the first data through the first frequency band FB1 that is the random access frequency band, at the fifth time t5 that is the intermediate transmission time.

The PSDU 25 may include an STF, a long training field (LTF), and the first data. The first station STA1 may transmit the STF of the PSDU 25 through the first frequency band FB1 between the fifth time t5 and the sixth time t6. Next, the first station STA1 may transmit the LTF of the PSDU 25 through the first frequency band FB1 between the sixth time t6 and the seventh timed t7. Next, the first station STA1 may transmit the first data of the PSDU 25 through the first frequency band FB1 between the seventh time t7 and the eighth time t8.

The first access point AP1 may determine whether the PSDU 25 including the first data has been transmitted, by determining whether the STF has been transmitted through the first frequency band FB1 at the intermediate transmission time. In the embodiment of FIG. 3, because the first access point AP1 has received the STF through the first frequency band FB1 at the fifth time t5, the first access point AP1 may determine that the PSDU 25 including the first data has been transmitted.

As such, in one or more embodiments, when a transmission request for the first data occurs in the PPDU transmission period, the PSDU 25 including the first data may be transmitted through the random access frequency band at the intermediate transmission time such that latency-sensitive data may be transmitted with minimum latency.

The STF transmitted between the fifth time t5 and the sixth time t6 may be used in an operation such as automatic gain control (AGC). In this case, when the STF is transmitted between the fifth time t5 and the sixth time t6 in the first frequency band FB1 in which the PSDU 25 including the first data is transmitted and the STF is not transmitted in the second and third frequency bands FB2 and FB3 in which the PSDU 25 including the first data is not transmitted, an AGC operation may not be accurately performed, and thus, the size of a transmitted signal may be outside a preset range.

In one or more embodiments, other stations not using the first frequency band FB1 that is the random access frequency band may transmit the STF to the access point at the intermediate transmission time. For example, the second station STA2 may transmit the STF to the first access point AP1 through the second frequency band FB2 at the fifth time t5 that is the intermediate transmission time. Also, the third station STA3 may transmit the STF to the first access point AP1 through the third frequency band FB3 at the fifth time t5 that is the intermediate transmission time. Accordingly, the STF may be transmitted at the intermediate transmission time over the entire frequency band FB1 to FB3 in which the PPDU 24 is transmitted. The first access point AP1 may perform a smooth AGC operation by performing an AGC operation based on the STF transmitted over the entire frequency band FB1 to FB3. Herein, the entire frequency band FB1 to FB3 may refer to all frequency bands that are available for all stations including the first to third stations STA1 to STA3 that are connected to the first access point AP1.

The LTF transmitted between the sixth time t6 and the seventh time t7 may be used in an operation such as channel estimation. In this case, when the LTF is transmitted between the sixth time t6 and the seventh time t7 in the first frequency band FB1 in which the PSDU 25 including the first data is transmitted and the LTF is not transmitted in the second and third frequency bands FB2 and FB3 in which the PSDU 25 including the first data is not transmitted, a channel estimation operation may not be accurately performed and thus a received signal may not be correctly decoded.

In one or more embodiments, other stations not using the first frequency band FB1 that is the random access frequency band may transmit the LTF to the access point at the intermediate transmission time. For example, the second station STA2 may transmit the LTF to the first access point AP1 through the second frequency band FB2 at the sixth time t6 that is the time after the STF has been transmitted. Also, the third station STA3 may transmit the LTF to the first access point AP1 through the third frequency band FB3 at the sixth time t6 that is the time after the STF has been transmitted. Accordingly, the LTF may be transmitted at the sixth time t6 over the entire frequency band FB1 to FB3 in which the PPDU 24 is transmitted. The first access point AP1 may accurately decode the received signal by performing a channel estimation operation based on the LTF transmitted over the entire frequency band FB1 to FB3.

After the time corresponding to the SIFS has elapsed from the eighth time t8 at which the first to third stations STA1 to STA3 completed transmission of the PPDU 24, the first access point AP1 may transmit an acknowledgement frame 26 for the PPDU 24 to the first to third stations STA1 to STA3.

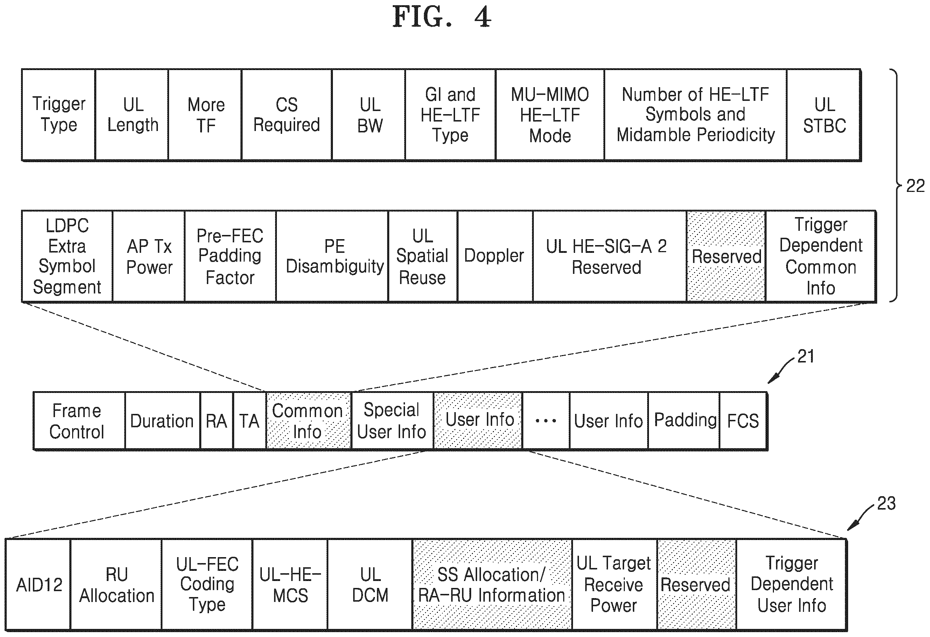

FIG. 4 is a diagram illustrating an example of a trigger frame transmitted by an access point according to one or more embodiments.

Referring to FIG. 4, an example of fields included in the trigger frame transmitted by the first access point AP1 may be identified.

The trigger frame 21 may be used for transmission of a trigger-based (TB) PPDU. For example, through the trigger frame 21, the first access point AP1 may set an uplink bandwidth and allocate a resource unit for uplink multi-user (MU) transmission.

The trigger frame 21 may include a frame control field, a duration field, a receiver address (RA) field, a transmitter address (TA) field, a common information field 22, a special user information field, at least one user information field 23, a padding field, and a frame check sequence (FCS) field.

The frame control field may include information about the version of a media access control (MAC) protocol and other additional control information. The duration field may include time information for setting a network allocation vector (NAV) or information about an identifier (e.g., association identifier (AID)) of a terminal. The RA field may include address information about a receiving device (e.g., a station) of the trigger frame 21 and may be omitted. The TA field may include address information about a transmitting device (e.g., an access point) of the trigger frame 21. The common information field 22 may include control information commonly applied to receiving devices that receive the trigger frame. The special user information field may be ignored in the legacy protocol standard and may be omitted from the trigger frame 21. In some embodiments, the special user information field may be used in a sounding protocol for uplink beamforming. The at least one user information field 23 may respectively correspond to at least one receiving device that receives the trigger frame 21. Each of the common information field 22 and the user information field 23 may include a plurality of subfields as illustrated in FIG. 4 and may include a plurality of subfields defined by EHT in some embodiments.

In one or more embodiments, the first access point AP1 may indicate an intermediate transmission time to the first to third stations STA1 to STA3 through a reserved field among the plurality of subfields included in the common information field 22 of the trigger frame 21. Accordingly, when a transmission request for the first data occurs in the PPDU transmission period, the first to third stations STA1 to STA3 may determine the intermediate transmission time based on the reserved field included in the common information field 22 of the trigger frame 21. Also, the first to third stations STA1 to STA3 may transmit an STF at the intermediate transmission time based on the trigger frame 21 and transmit an LTF after transmitting the STF.

In one or more embodiments, the first access point AP1 may indicate a random access frequency band to the first to third stations STA1 to STA3 through an RA-RU information field among the plurality of subfields included in the user information field 23 of the trigger frame 21. That is, the RA-RU information field may include information about the random access frequency band. Accordingly, the first to third stations STA1 to STA3 may determine the random access frequency band (the first frequency band FB1 in the embodiment of FIG. 3) based on the RA-RU information field included in the user information field 23 of the trigger frame 21.

In one or more embodiments, the first access point AP1 may indicate an intermediate transmission time to the first to third stations STA1 to STA3 through an RA-RU information field among the plurality of subfields included in the user information field 23 of the trigger frame 21. That is, the RA-RU information field may include information about the intermediate transmission time. Accordingly, when a transmission request for the first data occurs in the PPDU transmission period, the first to third stations STA1 to STA3 may determine the intermediate transmission time based on the RA-RU information field included in the user information field 23 of the trigger frame 21. Also, the first to third stations STA1 to STA3 may transmit an STF at the intermediate transmission time based on the trigger frame and transmit an LTF after transmitting the STF.

In this case, when both the random access frequency band and the intermediate transmission time are indicated by the RA-RU information field included in the user information field 23 of the trigger frame 21, at least one bit among the bits included in the RA-RU information field may indicate the random access frequency band and the other bits not indicating the random access frequency band may indicate the intermediate transmission time.

In one or more embodiments, the first access point AP1 may indicate an intermediate transmission time to the first to third stations STA1 to STA3 through a reserved field among the plurality of subfields included in the user information field 23 of the trigger frame 21. That is, the reserved field may include information about the intermediate transmission time. Accordingly, when a transmission request for the first data occurs in the PPDU transmission period, the first to third stations STA1 to STA3 may determine the intermediate transmission time based on the trigger frame. Also, the first to third stations STA1 to STA3 may transmit an STF at the intermediate transmission time based on the trigger frame and transmit an LTF after transmitting the STF.

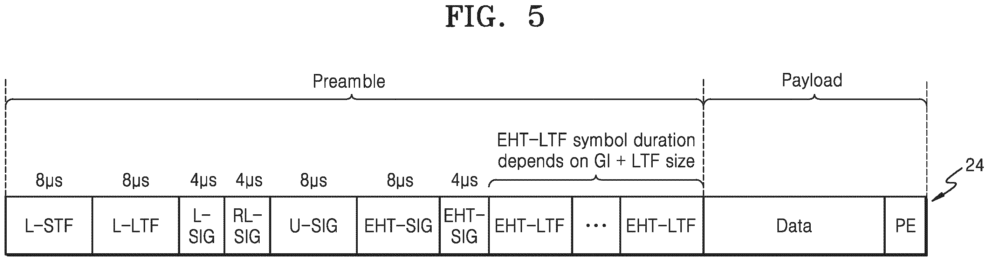

FIG. 5 is a diagram illustrating an example of a PPDU transmitted by a station according to one or more embodiments.

Referring to FIG. 5, an example of the PPDU 24 transmitted by the first to third stations STA1 to STA3 in response to the trigger frame transmitted by the first access point AP1 may be identified.

For example, FIG. 5 may illustrate a structure of an EHT PPDU. Moreover, hereinafter, embodiments will be described focusing on the standard related to EHT. However, the disclosure may also be applied to the next-generation standard related to UHR, and in this case, the EHT PPDU may be referred to as a UHR PPDU.

The EHT PPDU 24 may include a preamble including training fields and signal fields, and a payload including a data field and a packet extension (PE) field. In the preamble, the EHT PPDU may include a legacy-short training field (L-STF), a legacy-long training field (L-LTF), a legacy-signal (L-SIG) field, a repeated legacy-signal (RL-SIG) field, a universal signal (U-SIG) field, an extremely high throughput-signal (EHT-SIG) field, an extremely high throughput-short training field (EHT-STF), and an extremely high throughput-long training field (EHT-LTF). The U-SIG field and the EHT-SIG field may be simply referred to as U-SIG and EHT-SIG respectively. Also, as described above, in the next-generation standard related to UHR, the EHT-SIG field may be referred to as a UHR-SIG field.

The L-STF may include a short training OFDM symbol and may be used for frame detection, AGC, diversity detection, and coarse frequency/time synchronization. The L-LTF may include a long training OFDM symbol and may be used for fine frequency/time synchronization and channel estimation. The L-SIG field may be used to transmit control information and may include information about a data rate and a data length. In some embodiments, the L-SIG field may be repeated in the RL-SIG field.

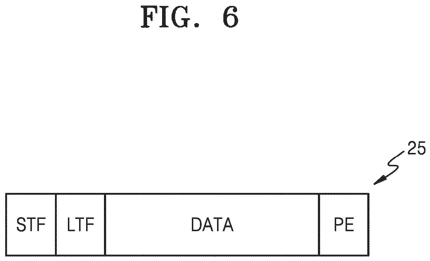

FIG. 6 is a diagram illustrating an example of a PSDU transmitted by a station according to embodiment.

Referring to FIG. 6, an example of the PSDU 25 including the first data transmitted to the first access point AP1 when a transmission request for the first data occurs may be identified.

In one or more embodiments, the PSDU 25 may include an STF field, an LTF field, a data field, and a packet extension (PE) field. The STF field may be equal to the L-STF included in the PPDU 24 of FIG. 5 and may be used for frame detection, AGC, diversity detection, and coarse frequency/time synchronization. The LTF field may be equal to the L-LTF included in the PPDU 24 of FIG. 5 and may be used for fine frequency/time synchronization and channel estimation. The data field may include the first data.

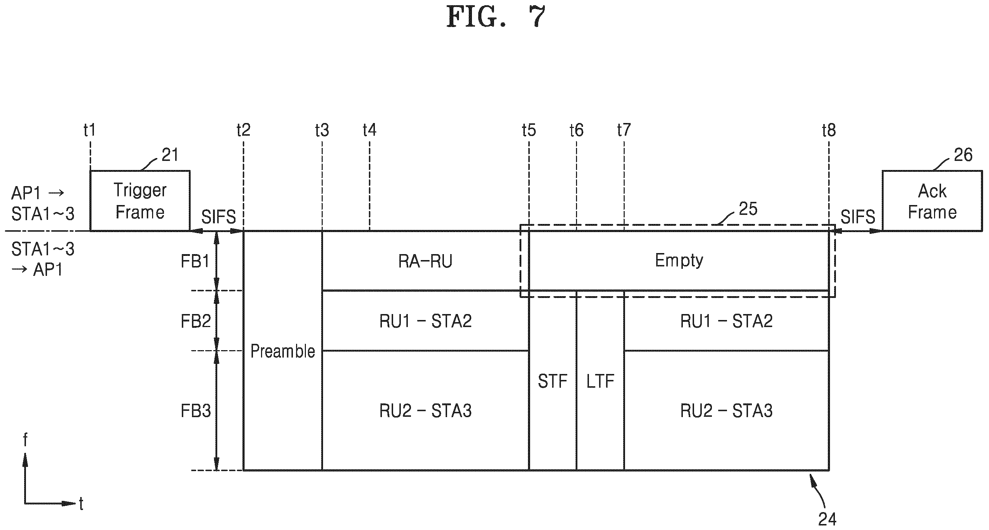

FIG. 7 is a timing diagram illustrating another example of signaling between an access point and a station in a wireless communication system according to one or more embodiments.

Referring to FIG. 7, signals transmitted between the first access point AP1 and the first to third stations STA1 to STA3 may be identified. In this case, unlike the embodiment of FIG. 3, the embodiment of FIG. 7 may be one or more embodiments in which a transmission request for the first data does not occur in the first station STA1 at the fourth time t4.

Because a transmission request for the first data did not occur in the first station STA1 at the fourth time t4, no signal may be transmitted through the first frequency band FB1 between the fifth time t5 and the eighth time t8. In this case, even when no signal is transmitted through the first frequency band FB 1, the second and third stations STA2 and STA3 may transmit the STF at the fifth time t5 that is the intermediate transmission time and transmit the LTF at the sixth time t6.

The first access point AP1 may determine whether the PSDU 25 including the first data has been transmitted, by determining whether the STF has been transmitted through the first frequency band FB1 at the intermediate transmission time. In the embodiment of FIG. 7, because the first access point AP1 has not received the STF through the first frequency band FB1 at the fifth time t5, the first access point AP1 may determine that the PSDU 25 including the first data has not been transmitted.

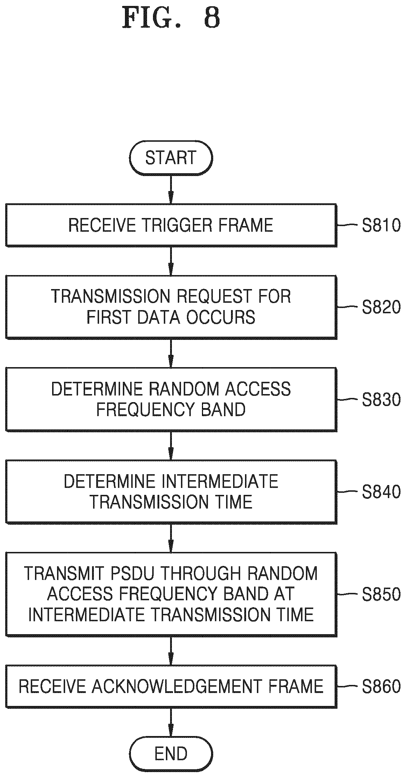

FIG. 8 is a flowchart illustrating an operation of a station according to one or more embodiments.

Referring to FIG. 8, in operation S810, the station may receive a trigger frame from an access point. The trigger frame may have the structure described above with reference to FIG. 4.

In operation S820, a transmission request for first data may occur in the station in a PPDU transmission period. The first data may be latency-sensitive data and may be data that should be transmitted to the access point as rapidly as possible.

In operation S830, the station may determine a random access frequency band based on the trigger frame. In this case, the station may determine the random access frequency band based on an RA-RU information field included in the trigger frame.

In operation S840, the station may determine an intermediate transmission time based on the trigger frame. In one or more embodiments, the station may determine the intermediate transmission time based on the RA-RU information field included in the trigger frame. In another embodiment, the station may determine the intermediate transmission time based on a reserved field included in the trigger frame.

In operation S850, the station may transmit a PSDU including an STF, an LTF, and the first data through the random access frequency band at the intermediate transmission time. In this case, the station may sequentially transmit the STF, the LTF, and the first data at the intermediate transmission time.

In this case, because the trigger frame instructs to transmit the STF and the LTF at the intermediate transmission time over the entire frequency band in which the PPDU is transmitted, other stations communicating with the access point may also transmit the STF and the LTF to the access point at the intermediate transmission time.

In operation S860, the station may receive, from the access point, an acknowledgment frame for the PSDU transmitted in operation S850.

By using the operating method of the station described above, when a transmission request for the first data occurs in the PPDU transmission period, the PSDU including the STF and the first data may be transmitted through the random access frequency band at the intermediate transmission time such that latency-sensitive data may be rapidly transmitted. Also, by using the trigger frame to instruct to transmit the STF and the LTF at the intermediate transmission time over the entire frequency band where the PPDU is transmitted, a smooth AGC operation and channel estimation operation may be performed.

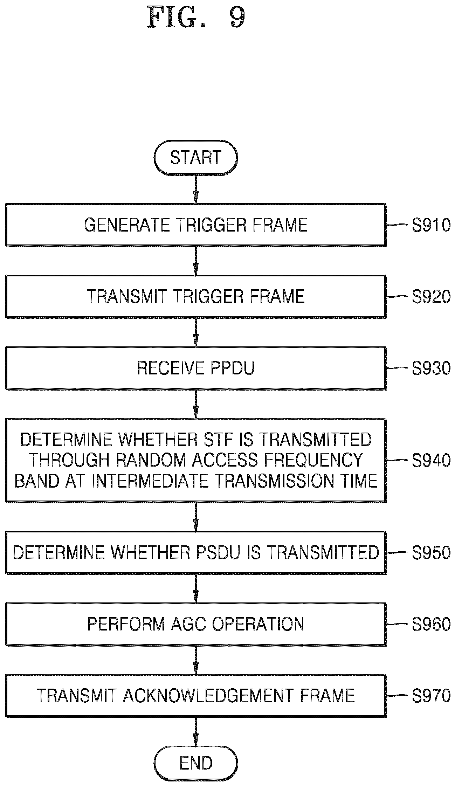

FIG. 9 is a flowchart illustrating an operation of an access point according to one or more embodiments.

Referring to FIG. 9, in operation S910, the access point may generate a trigger frame.

For example, the access point may generate a field instructing that a PSDU including an STF, an LTF, and first data may be transmitted through a random access frequency band at an intermediate transmission time in a PPDU transmission period.

In one or more embodiments, by generating an RA-RU field indicating the random access frequency band and the intermediate transmission time, the access point may use the trigger frame to indicate that the PSDU may be transmitted through the random access frequency band at the intermediate transmission time.

In another embodiment, by generating an RA-RU field indicating the random access frequency band and generating a reserved field indicating the intermediate transmission time, the access point may use the trigger frame to indicate that the PSDU may be transmitted through the random access frequency band at the intermediate transmission time.

Also, the access point may generate a field instructing to transmit the STF at the intermediate transmission time over the entire frequency band in which the PPDU is transmitted. Also, the access point may generate a field instructing to transmit the LTF at the time after the transmission of the STF, over the entire frequency band in which the PPDU is transmitted.

In operation S920, the access point may transmit the trigger frame generated in operation S910 to a plurality of stations.

In operation S930, the access point may receive the PPDU generated based on the trigger frame from the plurality of stations in response to the trigger frame transmitted in operation S920. In this case, when there is a station among the plurality of stations in which a transmission request for the first data has occurred in the PPDU transmission period, the access point may receive the PSDU including the STF, the LTF, and the first data from the station at the intermediate transmission time. When the access point receives the PSDU, the access point may sequentially receive the STF, the LTF, and the first data. That is, the access point may receive the STF at the intermediate transmission time, receive the LTF after receiving the STF, and receive the first data after receiving the LTF.

In operation S940, the access point may determine whether the STF has been transmitted through the random access frequency band at the intermediate transmission time. By calculating a correlation value between a signal received through the random access frequency band and a signal received through the frequency band allocated to another resource unit, the access point may determine whether the STF has been transmitted through the random access frequency band at the intermediate transmission time.

In operation S950, the access point may determine whether the PSDU including the first data has been transmitted through the random access frequency band, based on the result of determining, in operation S940, whether the STF has been transmitted through the random access frequency band at the intermediate transmission time.

When it is determined that the STF has been transmitted through the random access frequency band at the intermediate transmission time, the access point may determine that the PSDU including the first data has been transmitted through the random access frequency band.

When it is determined that the STF has not been transmitted through the random access frequency band at the intermediate transmission time, the access point may determine that the PSDU including the first data has not been transmitted through the random access frequency band.

In operation S960, the access point may perform an AGC operation based on the STF transmitted at the intermediate transmission time of the PPDU transmission period. In this case, the access point may perform an AGC operation based on the STF transmitted at the intermediate transmission time of the PPDU transmission period over the entire frequency band in which the PPDU is transmitted. Accordingly, a smooth AGC operation may be performed in the access point.

Additionally, the access point may perform a channel estimation operation based on the LTF transmitted at the intermediate transmission time of the PPDU transmission period after the STF has been transmitted. In this case, the access point may perform a channel estimation operation based on the LTF transmitted at the intermediate transmission time of the PPDU transmission period over the entire frequency band in which the PPDU is transmitted after the STF has been transmitted. Accordingly, the access point may accurately decode the received signal.

In operation S970, the access point may transmit an acknowledgment frame to the station. In this case, when the access point has received the PSDU, the acknowledgment frame may be an acknowledgment frame for the PSDU.

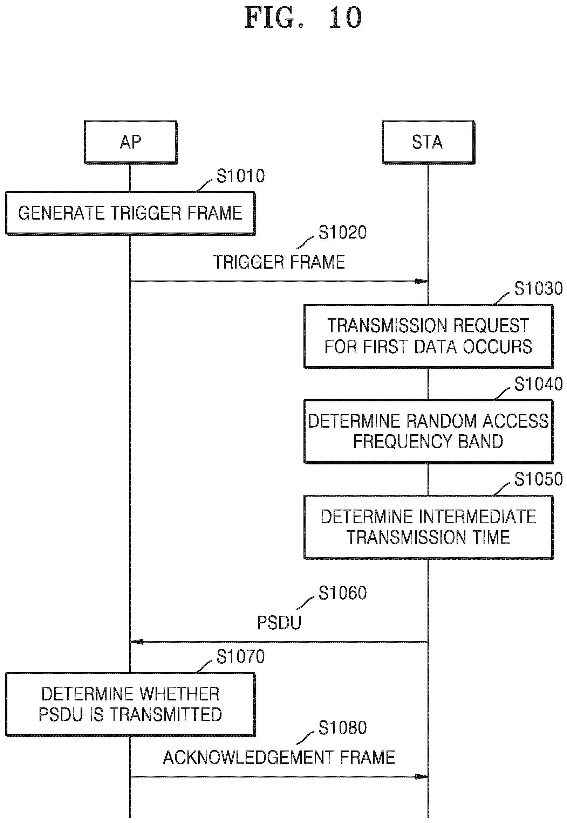

FIG. 10 is a flowchart illustrating an operation of a wireless communication system according to one or more embodiments.

Referring to FIG. 10, in operation S1010, an access point may generate a trigger frame. A method of generating the trigger frame may be the same as that described above in operation S910 of FIG. 9.

In operation S1020, the access point may transmit the trigger frame generated in operation S1010 to a station.

In operation S1030, a transmission request for first data may occur in the station.

In operation S1040, the station may determine a random access frequency band. In this case, the station may determine the random access frequency band based on an RA-RU information field included in the trigger frame.

In operation S1050, the station may determine an intermediate transmission time based on the trigger frame. In this case, the station may determine the intermediate transmission time based on an RA-RU information field or a reserved field included in the trigger frame.

In operation S1060, the station may transmit a PSDU including an STF, an LTF, and the first data through the random access frequency band at the intermediate transmission time.

In operation S1070, the access point may determine whether the PSDU including the first data has been transmitted through the random access frequency band. The access point may determine whether the PSDU including the first data has been transmitted through the random access frequency band, by determining whether the STF has been transmitted through the random access frequency band at the intermediate transmission time.

In operation S1080, the access point may transmit an acknowledgment frame to the station.

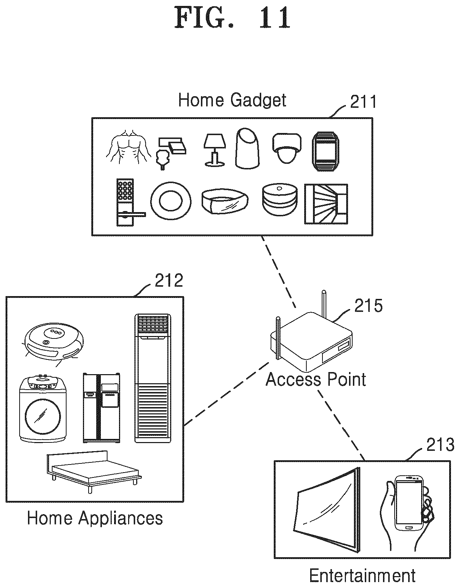

FIG. 11 is a diagram illustrating examples of devices for wireless communication according to one or more embodiments.

Referring to FIG. 11, an Internet of Things (IoT) network system may include a home gadget 211, a home appliance 212, an entertainment device 213, and an access point 215.

Like the stations described above with reference to FIGS. 1 to 10, a transmitting device included in the home gadget 211, the home appliance 212, and the entertainment device 213 of FIG. 11 may transmit a PSDU including first data through a random access frequency band at an intermediate transmission time when a transmission request for the first data occurs in a PPDU transmission period. Also, like the stations described above with reference to FIGS. 1 to 10, the transmitting device included in the home gadget 211, the home appliance 212, and the entertainment device 213 of FIG. 11 may transmit an STF and an LTF through an allocated resource unit at the intermediate transmission time, even when a transmission request for the first data does not occur in the PPDU transmission period. Also, like the access point AP described above with reference to FIGS. 1 to 10, the access point 215 of FIG. 11 may transmit a trigger frame indicating the intermediate transmission time and the random access frequency band.

Accordingly, latency-sensitive data may be rapidly transmitted and a smooth AGC operation and channel estimation operation may be performed.

## Claims

1. An operating method of a first apparatus (15) communicating with a second apparatus (16) in a wireless network (14), the operating method comprising:
receiving (S1020), from the second apparatus (16), a trigger frame (21) comprising information about a random access frequency band (FB1) and information about an intermediate transmission time (t5); and
transmitting (S1060) a physical layer convergence procedure, PLCP, service data unit, PSDU (25), comprising a short training field, STF, and first data to the second apparatus (16) through the random access frequency band (FB1) at the intermediate transmission time (t5),
wherein the intermediate transmission time (t5) is in a physical layer protocol data unit, PPDU (24), transmission period.

2. The operating method of claim 1, wherein the receiving the trigger frame (21) comprises receiving a random access resource unit, RA-RU, information field comprising the information about the random access frequency band (FB1).

3. The operating method of claim 1 or 2, wherein the receiving the trigger frame (21) comprises receiving an RA-RU information field comprising the information about the intermediate transmission time (t5).

4. The operating method of any one of claims 1 to 3, wherein the receiving the trigger frame (21) comprises receiving a reserved field comprising the information about the intermediate transmission time (t5).

5. The operating method of any one of claims 1 to 4, wherein the trigger frame (21) instructs for the first apparatus (15) to transmit the STF at the intermediate transmission time (t5) over a frequency band (FB1-FB3) in which the PPDU (24) is transmitted.

6. The operating method of any one of claims 1 to 5, wherein the PSDU (25) further comprises a long training field, LTF, and
wherein the trigger frame (21) instructs the first apparatus (15) to transmit the LTF after transmitting the STF, over a frequency band (FB 1-FB3) in which the PPDU (24) is transmitted.

7. The operating method of any one of claims 1 to 6, further comprising receiving (S1070) an acknowledgement frame (26) for the PSDU (25) from the second apparatus (16) after transmitting the PSDU (25) to the second apparatus (16).

8. An operating method of a second apparatus (16) communicating with a first apparatus (15) in a wireless network (14), the operating method comprising:
generating (S1010) a trigger frame (21); and
transmitting (S1020) the trigger frame (21) to the first apparatus (15),
wherein the trigger frame (21) comprises information about an intermediate transmission time (t5) in a physical layer protocol data unit, PPDU (24), transmission period at which the first apparatus (15) is to transmit (S1060) a physical layer convergence procedure, PLCP, service data unit, PSDU (25), comprising a short training field, STF, and first data through a random access frequency band (FB1).

9. The operating method of claim 8, wherein the trigger frame (21) comprises a random access resource unit, RA-RU, information field indicating the random access frequency band (FB1).

10. The operating method of claim 8 or 9, wherein the trigger frame (21) comprises a random access resource unit, RA-RU, information field indicating the intermediate transmission time (t5).

11. The operating method of any one of claims 8 to 10, wherein the trigger frame (21) comprises a reserved field indicating the intermediate transmission time (t5).

12. The operating method of any one of claims 8 to 11, wherein the trigger frame (21) instructs the first apparatus (15) to transmit the STF at the intermediate transmission time (t5) over a frequency band (FB1-FB3) in which the PPDU (24) is transmitted.

13. The operating method of any one of claims 8 to 12, wherein the PSDU (25) further comprises a long training field, LTF, and
wherein the trigger frame (21) instructs the first apparatus (15) to transmit the LTF after transmitting the STF, over a frequency band (FB1-FB3) in which the PPDU (24) is transmitted.

14. The operating method of any one of claims 8 to 13, further comprising receiving a PPDU (24) generated based on the trigger frame (21), from the first apparatus (15),
wherein the receiving the PPDU (24) comprises receiving the PSDU (25) comprising the first data at the intermediate transmission time (t5) over the random access frequency band (FB1).

15. The operating method of claim 14, wherein the receiving the PSDU (25) comprises:
receiving the STF at the intermediate transmission time (t5); and
receiving a long training field, LTF, after receiving the STF.
